# EUROPÄISCHE PATENTANMELDUNG

(11) **EP 1 502 642 A1**
(43) Veröffentlichungstag der Anmeldung: **02.02.2005**
(21) Anmeldenummer: 04017199.3
(22) Anmeldetag: 21.07.2004
(51) Int. Cl.: B01D 46/52, B60H 3/06

(54) **Filteranordnung**

(30) Priorität: 28.07.2003 DE 10334567
(71) Anmelder: Behr GmbH & Co. KG, 70469 Stuttgart (DE)
(72) Erfinder: Bläsi, Rainer Dipl.-Ing (FH), 73207 Plochingen (DE); Bosquet, Stéphane, 70195 Stuttgart (DE); Schweizer, Gebhard Dipl.-Ing., 71229 Leonberg (DE)

(57) **Zusammenfassung**

Die Erfindung betrifft eine Filteranordnung, insbesondere für eine Klimaanlage (K) eines Kraftfahrzeugs, welche ein mit einem Filterdeckel (6) vormontiertes Filterelement (2) aufweist, das in einem Luftführungsgehäuse (L) anordenbar ist, wobei die Filteranordnung (F) eine Schmutzwanne (5) zum Auffangen und einfachen Entsorgen von vom Filterelement (2) ausgefiltertem Schmutz aufweist.

## Beschreibung

Die Erfindung betrifft eine Filteranordnung, insbesondere für eine Klimaanlage für ein Kraftfahrzeug, gemäß dem Oberbegriff des Anspruchs 1.

Aus der DE 101 23 969 C1 ist eine Filteranordnung mit einem Faltenfilter und einem Deckel eines Filtergehäuses bekannt, wobei der Faltenfilter und der Deckel eine vormontierbare Einheit bilden und zerstörungsfrei lösbar sowie im Wesentlichen dichtend miteinander verbunden sind. Eine derartige Filteranordnung lässt jedoch noch Wünsche offen.

Es ist Aufgabe der Erfindung, eine verbesserte Filteranordnung zur Verfügung zu stellen.

Diese Aufgabe wird gelöst durch eine Filteranordnung mit den Merkmalen des Anspruchs 1. Vorteilhafte Ausgestaltungen sind Gegenstand der Unteransprüche

Erfindungsgemäß ist eine Filteranordnung, insbesondere für eine Klimaanlage eines Kraftfahrzeugs, vorgesehen, welche ein mit einem Filterdeckel vormontiertes Filterelement aufweist, das in einem Luftführungsgehäuse anordenbar ist, wobei die Filteranordnung eine Schmutzwanne zum Auffangen und einfachen Entsorgen von vom Filterelement ausgefiltertem Schmutz aufweist.

Bevorzugt dient der Filterdeckel als insbesondere tragendes Gehäuse für das Filterelement, so dass beliebige Filterelemente, insbesondere auch sehr weiche Filterelemente, ohne zusätzlichen Aufwand und Probleme bei der Montage verwendet werden können.

Eine Fertigung des Filterdeckels einschließlich der Schmutzwanne aus Kunststoff, beispielweise aus Polypropylen, ermöglicht eine einfache und preiswerte Herstellung. Ferner bietet Kunststoff Gewichtsvorteile. Die Steifigkeit ist für die entsprechende Verwendung vollständig ausreichend, insbesondere wenn die Filteranordnung bei Betrieb in einem Luftführungsgehäuse angeordnet ist, an dem zumindest die Schmutzwanne und die äußeren Bereiche direkt dicht anliegen.

Die Schmutzwanne ist in einem unteren Bereich vor dem Filterelement in normaler Luftströmungsrichtung gesehen in einem Luftführungsgehäuse einer Klimaanlage anordenbar.

Bevorzugt weist die Schmutzwanne eine einem Luftführungsgehäuse einer Klimaanlage angepasste Kontur auf, so dass keine zusätzlichen abdichtenden Elemente verwendet werden müssen und Klappergeräusche vermieden werden.

Beim Filterelement handelt es sich vorzugsweise um einen Faltenfilter, wie in der DE 101 23 969 C1 offenbart.

Bevorzugt ist die Filteranordnung schubladenartig von der Seite in das Luftführungsgehäuse einführbar. Dies ermöglicht einen einfachen und schnellen Wechsel im Bedarfsfall. Ein Austausch des Filterelements kann getrennt erfolgen, so dass der Filterdeckel wiederverwendet werden kann.

Im Folgenden wird die Erfindung anhand eines Ausführungsbeispiels unter Bezugnahme auf die Zeichnung im Einzelnen erläutert. In der Zeichnung zeigen:

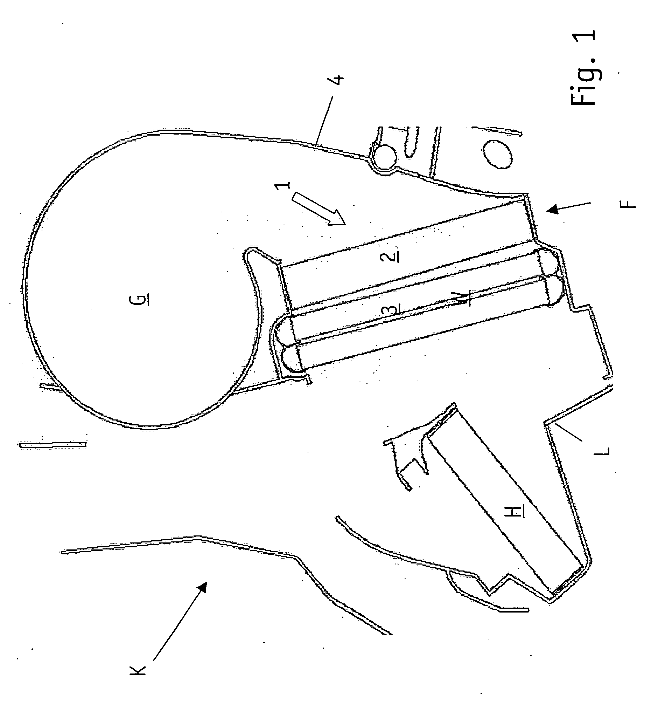

- Fig. 1: einen Schnitt durch den zentralen Bereich einer Kraftfahrzeug-Klimaanlage,

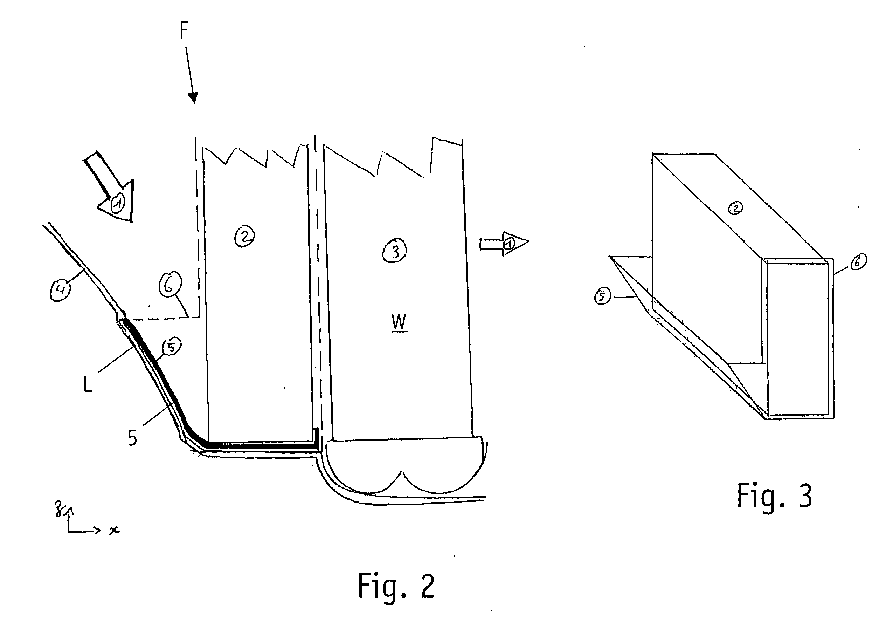

- Fig. 2: einen Schnitt durch eine erfindungsgemäße Filteranordnung mit nachgeordnetem Wärmetauscher, und
- Fig. 3: eine perspektivische Darstellung der Filteranordnung von Fig. 2.

Eine Klimaanlage K eines Kraftfahrzeuges weist ein Gebläse G, eine Filteranordnung F, einen Wärmetauscher W, vorliegend einen Verdampfer und einen Heizkörper H auf, welche in einem Luftführungsgehäuse L angeordnet sind, durch welches Luft, die von der Umgebung und/oder dem Fahrzeuginnenraum angesaugt wird, wunschgemäß temperiert und wieder dem Fahrzeuginnenraum zugeführt wird. Hierbei ist die Luftströmungsrichtung 1 durch Pfeile angedeutet.

Zur Reinigung der Luft ist - in Luftströmungsrichtung 1 gesehen - ein Filterelement 2 vor dem Wärmetauscher W, der in einem Teil der Zeichnung auch mit dem Bezugszeichen 3 bezeichnet ist, angeordnet. Das Filterelement 2 ist im Luftführungsgehäuse L, in der Zeichnung auch mit dem Bezugszeichen 4 bezeichnet, angeordnet, wobei Teil des Luftführungsgehäuses L auch eine in Luftströmungsrichtung 1 gesehen vor dem Luftführungsgehäuse L angeordnete Schmutzwanne 5 ist. Zur Abdeckung der Schmutzwanne 5 und des Filterelements 2 ist ein Filterdeckel 6 vorgesehen, durch welchen die Luft problemlos strömen kann.

Die Schmutzwanne 5 ist einstückig mit dem Filterdeckel 6 verbunden, der gehäuseartig ausgebildet ist. Dabei bestehen Schmutzwanne 5 und Filterdeckel 6 aus Polypropylen, jedoch können auch andere Materialien verwendet werden, wobei Kunststoffe bevorzugt werden.

In Hinblick auf die weitere Ausgestaltung der Filteranordnung F wird auf die DE 101 23 969 C1 verwiesen, deren Offenbarung ausdrücklich einbezogen wird.

### Bezugszeichenliste

- 1: Luftströmungsrichtung
- 2: Filterelement
- 3: Wärmetauscher
- 4: Gehäuse
- 5: Schmutzwanne
- 6: Filterdeckel

- F: Filteranordnung
- G: Gebläse
- H: Heizkörper
- K: Klimaanlage
- L: Luftführungsgehäuse
- W: Wärmetauscher

## Patentansprüche

1. Filteranordnung, insbesondere für eine Klimaanlage eines Kraftfahrzeugs, welche ein mit einem Filterdeckel (6) vormontiertes Filterelement (2) aufweist, das in einem Luftführungsgehäuse (L) anordenbar ist, **dadurch gekennzeichnet, dass** die Filteranordnung (F) eine Schmutzwanne (5) zum Auffangen und einfachen Entsorgen von vom Filterelement (2) ausgefiltertem Schmutz aufweist.

2. Filteranordnung nach Anspruch 1, **dadurch gekennzeichnet, dass** der Filterdeckel (6) als Gehäuse für das Filterelement (2) dient.

3. Filteranordnung nach Anspruch 1 oder 2, **dadurch gekennzeichnet, dass** der Filterdeckel (6) einschließlich der Schmutzwanne (5) aus Kunststoff gefertigt ist.

4. Filteranordnung nach einem der vorhergehenden Ansprüche, **dadurch gekennzeichnet, dass** die Schmutzwanne (5) in einem unteren Bereich vor dem Filterelement (2) in normaler Luftströmungsrichtung (1) gesehen in einem Luftführungsgehäuse (L) einer Klimaanlage (K) anordenbar ist.

5. Filteranordnung nach einem der vorhergehenden Ansprüche, **dadurch gekennzeichnet, dass** die Schmutzwanne (5) eine einem Luftführungsgehäuse (L) einer Klimaanlage (K) angepasste Kontur aufweist.

6. Filteranordnung nach einem der vorhergehenden Ansprüche, **dadurch gekennzeichnet, dass** das Filterelement (2) ein Faltenfilter ist.

7. Filteranordnung nach einem der vorhergehenden Ansprüche, **dadurch gekennzeichnet, dass** die Filteranordnung (F) schubladenartig von der Seite in das Luftführungsgehäuse (L) einführbar ist.

8. Klimaanlage für ein Kraftfahrzeug, **gekennzeichnet durch** eine Filteranordnung (F) gemäß einem der Ansprüche 1 bis 7.
